# EUROPÄISCHE PATENTSCHRIFT

(11) **EP 3 670 997 B1**
(45) Veröffentlichungstag und Bekanntmachung des Hinweises auf die Patenterteilung: **06.07.2022**
(21) Anmeldenummer: 18306734.7
(22) Anmeldetag: 19.12.2018
(51) Int. Cl.: F16L 59/065, F16L 59/14, F16L 59/153, F16L 11/15, F16L 11/16, F16L 11/18, F16L 11/20

(54) **FLEXIBLE VAKUUMISOLIERTE LEITUNG**
FLEXIBLE VACUUM INSULATED CONDUIT
CONDUITE FLEXIBLE ISOLÉE SOUS VIDE

(43) Veröffentlichungstag der Anmeldung: 24.06.2020
(73) Patentinhaber: Nexans, 92400 Courbevoie (FR)
(72) Erfinder: SCHULZ, Holger, 30165 HANNOVER (DE); ESSLER, Jürgen, 31547 REHBURG-LOCCUM (DE)
(74) Vertreter: Ipsilon

(56) Entgegenhaltungen:
- WO-A1-2013/120459
- FR-A1- 2 997 747
- US-A- 6 065 501

## Beschreibung

### Gebiet

Die Erfindung betrifft vakuumisolierte Leitung mit einem inneren und einem äußeren Wellschlauch. Außerdem betrifft die Erfindung eine Verladestation mit einer vakuumisolierten Leitung.

### Hintergrund

Vakuumisolierte Leitungen für den Transport tiefkalter (kryogener) Medien umfassen häufig einen inneren und einen äußeren Wellschlauch aus Metall. Der Zwischenraum zwischen dem inneren und dem äußeren Wellschlauch ist evakuiert, um eine sehr gute Wärmeisolierung zu erzielen, damit während des Transportes eines kryogenen Mediums durch die Leitung das kryogene Medium möglichst wenig Wärme aufnimmt. Zusätzlich ist der innere Wellschlauch in der Regel mit einer Superisolation ummantelt und wird mittels Abstandshaltern mittig in dem äußeren Wellschlauch gehaltert.

Da die Wellschläuche in axialer Richtung flexibel sind, führt der Druck des durch das Innenrohr transportierten kryogenen Mediums zu einer Längung der Leitung. Grundsätzlich ist eine solche Längung unerwünscht, weil sie zu einer unkontrollierten Bewegung der Leitung führen kann, die zu Beschädigungen an der Leitung oder an Objekten führen kann, die mit der Leitung in Berührung stehen. Um eine übermäßige Längung zu verhindern, ist es bekannt, den inneren und/oder den äußeren Wellschlauch mit einem Geflecht zu ummanteln. Das Geflecht ist zugfest und setzt der Längung der Leitung eine Grenze. Allerdings kann das Geflecht nur Zugkräfte aufnehmen, aber keine Druckkräfte, was dazu führt, dass sich bei der Herstellung der vakuumisolierten Leitung die Leitung zunächst verkürzt, wenn der Zwischenraum zwischen dem inneren Wellschlauch und dem äußeren Wellschlauch evakuiert wird. Wenn im Betrieb ein Medium mit Druck durch die Leitung transportiert wird, streckt sich die vakuumisolierte Leitung wieder, weil das Geflecht die dabei entstehenden Zugkräfte zunächst nicht aufnimmt bis es seine maximale Länge erreicht hat.

Bei den mit einem Geflecht ausgerüsteten vakuumisolierten Leitungen wird die Längenausdehnung zwar begrenzt, wenn ein Medium mit Druck durch die Leitung transportiert wird, aber die Längenausdehnung wird nicht gänzlich vermieden. Dabei spielt es keine Rolle, ob das Geflecht auf dem inneren Wellschlauch oder dem äußeren Wellschlauch angeordnet ist. Auch wenn sowohl der innere als auch der äußere Wellschlauch mit einem Geflecht ummantelt sind, ändert das an dem beschriebenen Verhalten grundsätzlich nichts.

Die WO 2013/120459 A1 betrifft eine Schlauchleitung aus zwei konzentrischen Wellschläuchen, die durch ein Vakuum voneinander isoliert sind. Um die mechanische Stabilität der Schlauchleitung zu verbessern, sind die Metallschläuche von einer ersten Verstärkungsschicht und einer zweiten Verstärkungsschicht 4 umgeben. Die Verstärkungsschichten sind zug- und druckfest.

Die FR 2 997 747 A1 offenbart eine Leitung zum Transport eines kryogenen Fluids. Die Leitung weist einen inneren Wellschlauch auf, der von einer Verstärkungsschicht ummantelt ist. Die Leitung weist außerdem mehrere Isolationsschichten auf.

Hiervon ausgehend hat die vorliegende Erfindung die Aufgabe, eine vakuumisolierte Leitung zu schaffen, um eines oder mehrere der eingangs genannten Probleme zu überwinden oder zumindest zu verbessern.

### Zusammenfassung der Erfindung

Zur Lösung dieser Aufgabe schlägt die Erfindung nach einem ersten Aspekt eine vakuumisolierte Leitung mit einem inneren und einem äußeren Wellschlauch vor, die durch einen evakuierten Zwischenraum voneinander getrennt sind. Einer der Wellschläuche ist mit einem Verstärkungsschlauch ummantelt, der in axialer Richtung zug- und/oder druckfest ist. Gemäß einer ersten Alternative ist der Verstärkungsschlauch aus miteinander verbundenen Kunststoffelementen aufgebaut, die zueinander beweglich sind. Gemäß einer zweiten Alternative ist der Verstärkungsschlauch als Wickelschlauch ausgebildet ist, der aus miteinander verbundenen Metallstreifen aufgebaut ist. Ein solcher Wickelschlauch ist mechanisch stabil und kostengünstig herzustellen.

Sowohl der Wickelschlauch aus Metallstreifen als auch der Verstärkungsschlauch aus miteinander verbundenen Kunststoffelementen sind in axialer Richtung zug- und/oder druckfest. Ein Verstärkungsschlauch aus Kunststoff ist zum Beispiel überall dort von Vorteil, wo die Entstehung von Funken vermieden werden muss, weil eine erhöhte Explosionsgefahr besteht.

Mit dem Verstärkungsschlauch bzw. Wickelschlauch werden die mechanischen Eigenschaften der Leitung verbessert, beispielsweise schützt der Wickelschlauch die Leitung vor äußeren mechanischen Belastungen oder sogar Beschädigungen. Der Wickelschlauch dient gleichzeitig als Überbiegeschutz für die Wellschläuche. Mit dem Verstärkungsschlauch aus miteinander verbundenen Kunststoffelementen werden dieselben Vorteile verwirklicht wie mit einem Wickelschlauch, wobei die Vorteile bei den beiden Ausführungsformen graduell unterschiedlich stark ausgeprägt sein können.

Insbesondere die vakuumisolierte Leitung verändert ihre Länge nicht wesentlich, wenn sie bei dem Transport von einem Medium im Inneren mit Druck beaufschlagt ist. Insbesondere mit Wickelschläuchen lässt sich die Längung der Leitung gänzlich verhindern, wenn die Leitung mit Druck beaufschlagt wird.

Mit Vorteil sind die Wellschläuche in Umfangsrichtung gewellt und biegeflexibel ausgebildet.

Zweckmäßigerweise ist auch der Verstärkungsschlauch biegeflexibel ausgebildet ist. Die Flexibilität des Verstärkungsschlauchs sorgt dafür, dass die vakuumisolierte Leitung insgesamt flexibel bleibt und am jeweiligen Einsatzort einfach zu verlegen ist.

Zweckmäßigerweise können der innere und der äußere Wellschlauch an ihren Enden vakuumdicht miteinander verschweißt sein.

Bei einem weiteren Ausführungsbeispiel der Leitung ist entweder der innere oder der äußere Wellschlauch mit dem Verstärkungsschlauch ummantelt, während der andere Wellschlauch mit einem Geflecht ummantelt ist. Bei diesem Ausführungsbeispiel wird üblicherweise der äußere Wellschlauch mit dem Verstärkungsschlauch umwickelt sein, weil dadurch gleichzeitig ein guter mechanischer Schutz gegen Querdruckbelastbarkeit erzielt wird. Grundsätzlich kann der Verstärkungsschlauch aber auch auf dem inneren Wellschlauch angeordnet sein. Beide Varianten haben gleichermaßen die Eigenschaft, dass sie ihre Länge im Wesentlichen nicht verändern, wenn sie ein unter Druck stehendes Medium transportieren.

Nach einem zweiten Aspekt schlägt die Erfindung eine Verladeeinrichtung für kryogene Fluide mit einer Leitung gemäß dem ersten Aspekt der Erfindung vor. Die Verladeeinrichtung vermeidet Probleme, die aus einer Längung der Leitung resultieren, wenn die Leitung zum Transport des kryogenen Fluids mit Druck beaufschlagt wird.

### Kurze Beschreibung der Zeichnung

Nachfolgend wird die Erfindung anhand einer Ausführungsform unter Bezugnahme auf die begleitenden Figuren exemplarisch näher erläutert. Alle Figuren sind rein schematisch und nicht maßstäblich. Es zeigen:
- Fig. 1a-1c: unterschiedliche Zustände einer herkömmlichen vakuumisolierten Leitung; und
- Fig. 2: eine erfindungsgemäße vakuumisolierte Leitung;
- Fig. 3: ein Schlauch aus miteinander verbundenen Kunststoffelementen; und
- Fig. 4: die Befestigung eines Geflechts auf einem Wellschlauch.

Gleiche oder ähnliche Elemente sind in den Figuren mit gleichen oder ähnlichen Bezugszeichen versehen.

### Ausführungsbeispiel

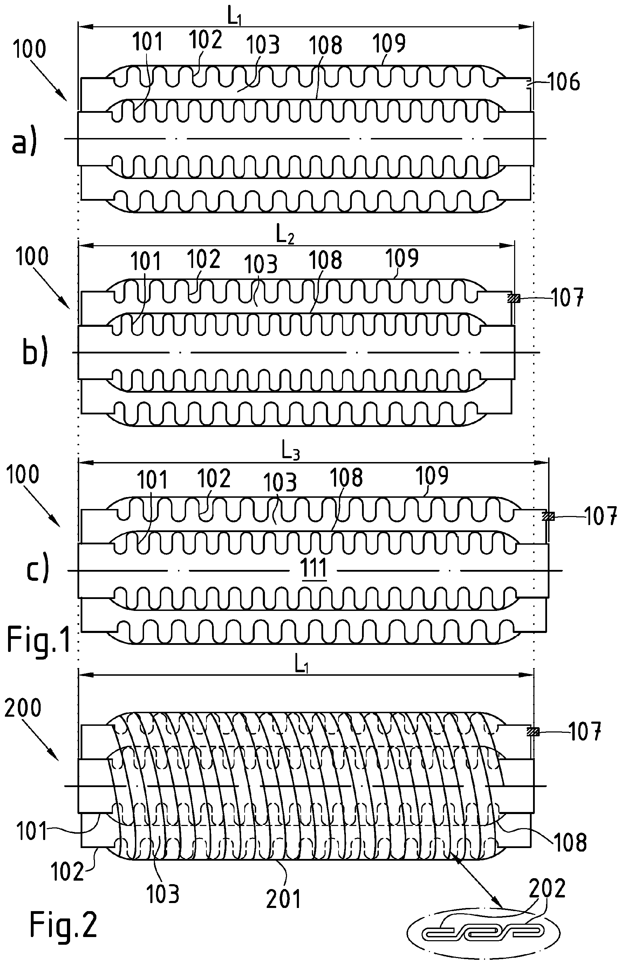

Figur 1a zeigt im Querschnitt eine Leitung 100, die einen inneren Wellschlauch 101 und einen äußeren Wellschlauch 102 aufweist, die durch einen Zwischenraum 103 voneinander getrennt sind. Der innere Wellschlauch 101 ist mit einer Superisolation ummantelt und wird mit Abstandshaltern mittig in dem äußeren Wellschlauch 102 gehaltert. Der Übersichtlichkeit halber sind die Superisolation und die Abstandshalter in Figur 1a nicht dargestellt. Die Wellschläuche 101,102 sind in Umfangsrichtung gewellt und daher quer zu ihrer Längsausdehnung biegeflexibel und in axialer Richtung dehnbar.

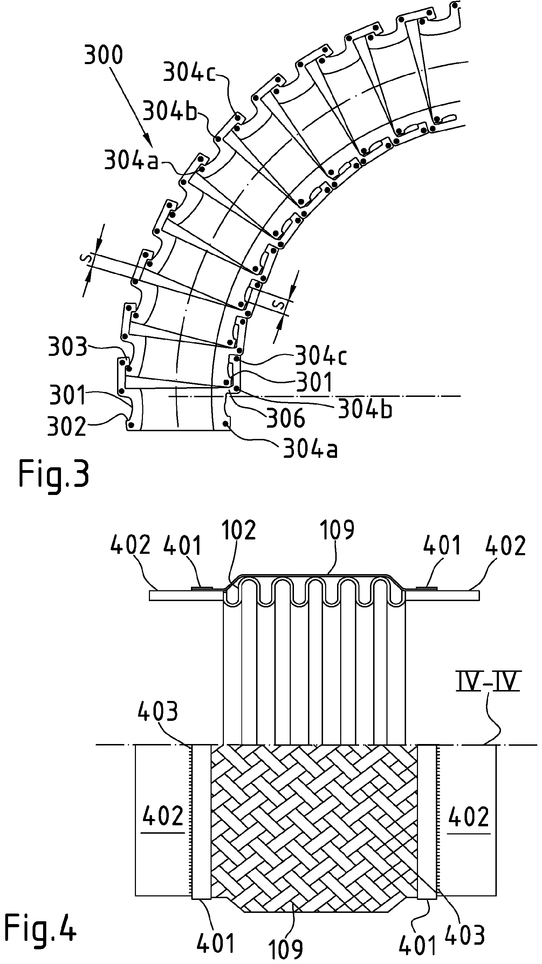

An ihren jeweiligen Enden sind die Wellschläuche 101,102 vakuumdicht miteinander verschweißt unter Ausnahme eines Kleinflansches 106, der für die Evakuierung des Zwischenraumes 103 benötigt wird. Die Wellschläuche 101,102 sind mit einem zugfesten Geflecht 108,109 aus Stahldraht ummantelt und an den jeweiligen Enden des inneren bzw. äußeren Wellschlauch 101,102 befestigt. Das Geflecht wird üblicherweise zusammen mit einem Ring 401 (Figur 4) auf den zylindrischen Endstutzen 402 (Figur 4) des Wellschlauchs aufgeschweißt. Bei anderen Ausführungsbespielen kann es auch beispielsweise mit einem Klemmring (nicht dargestellt) befestigt sein. Bei anderen Ausführungsbeispielen ist nur der innere Wellschlauch 101 oder nur der äußere Wellschlauch 102 mit einem Geflecht 108 bzw. 109 ummantelt. In diesem Fall ist das Geflecht so ausgelegt, dass nur ein einziges Geflecht die auftretenden Kräfte aufnehmen kann.

An den Enden der Leitung 100 wird je nach Anwendungsfall ein Verbindungsflansch zum Verbinden der Leitung 100 mit einer Anschlussstelle oder einer weiteren Leitung angeschweißt. Gegebenenfalls wird an einem oder beiden Enden der Leitung 100 eine Kupplung angebracht. Das kann zum Beispiel eine QCDC-Kupplung ("Quick Connect/Disconnect Coupler") oder eine Johnston-Kupplung sein. Die Wellschläuche 101,102 sind aus rostfreiem Stahl hergestellt. Die Verbindungsflansche bzw. Kupplungen sind in den Figuren nicht dargestellt.

Figur 1a zeigt eine zusammen gebaute Leitung, bei der der Zwischenraum 103 noch nicht evakuiert ist. In diesem Zustand sind die Wellschläuche 101,102 und die Gewebe 108,109 entspannt. Die Leitung 100 hat in diesem Zustand eine Länge L₁.

Zur Fertigstellung der Leitung wird der Zwischenraum 103 evakuiert, um eine Vakuumisolierung herzustellen. Dazu wird eine Vorrichtung auf dasjenige Ende der Leitung 100 gesetzt, wo sich der Kleinflansch 106 befindet. Die Vorrichtung ermöglicht es einerseits eine Vakuumpumpe anzuschließen, die den Zwischenraum 103 evakuiert. Andererseits gestattet es die Vorrichtung, einen Verschlussstopfen 107 (Figur 1b) in den Kleinflansch 106 einzuschrauben, der den Zwischenraum 103 vakuumdicht verschließt und zwar während die Pumpe noch angeschlossen und in Betrieb ist. Der Kleinflansch 106 wird dann verschlossen, wenn der Druck in dem Zwischenraum 103 auf einen vorbestimmten Wert gesunken ist.

Schon während der Zwischenraum 103 abgepumpt wird, verkürzt sich die Leitung 100 unter dem Einfluss des atmosphärischen Drucks in axialer Richtung auf die Länge L₂ wie es in Figur 1b gezeigt ist. In radialer Richtung sind die Wellschläuche 101,102 im wesentlichen druckstabil und verformen sich deshalb in radialer Richtung nicht. Die Geflechte 108,109 schieben sich dabei zusammen, wobei keine nennenswerte Gegenkraft erzeugt wird.

Figur 1c zeigt die im Betrieb befindliche Leitung 100, die ein unter Druck stehendes Medium im Innenraum 111 des inneren Wellschlauchs 101 transportiert. Dabei dehnt sich die Leitung 100 in axialer Richtung bis auf eine Länge L₃ aus, die begrenzt wird durch die maximale Längendehnung, welche die Gewebe 108,109 zulassen.

Wird der Druck im Inneren der Leitung 100 wieder reduziert, weil zum Beispiel ein Tankvorgang beendet ist, dann verkürzt sich die Leitung wieder auf die Länge L₂ (Figur 1B). Die Längendifferenz zwischen den beiden Zuständen beträgt ΔL = L₃ - L₂.

Die Flexibilität der Leitung 100 hängt unter anderem von dem Abstand der Wellungen und der Welttiefe der Wellschläuche 101,102 ab. Ein konkretes Ausführungsbeispiel der Leitung 100 weist in der Praxis folgende Werte auf: L₁ = 10 m; L₂ = 9,6 m und L₃ = 10,1 m. Die Evakuierung des Zwischenraums zwischen den Wellschläuchen 101,102 führt somit zu einer Verkürzung der Leitung um 4 %. Außerdem ist anzumerken, dass die Längenzunahme auch von dem Innendruck in der Leitung 100 abhängt.

Der Durchmesser der Leitung 100 kann beispielsweise 0,1 m bis 0,2 m betragen.

Für den Transport eines Mediums zwischen zwei festen Punkten werden in der Praxis häufig mehrere Leitungen miteinander verbunden. Werden beispielsweise eine Anzahl von N Leitungen miteinander verbunden, so hat die ganze Leitung eine Gesamtlänge von N * L₂ und im Betrieb nimmt die Gesamtlänge auf N * L₃ zu. Die Längenänderung zwischen beiden Zuständen ist dementsprechend N *ΔL und kann die eingangs beschriebenen Probleme verursachen.

Bei einem in Figur 2 dargestellten Ausführungsbeispiel einer erfindungsgemäßen Leitung 200 ist deshalb mindestens das Gewebe auf dem äußeren Wellschlauch 102 durch einen Wickelschlauch 201 ersetzt, der in axialer Richtung sowohl zug- als auch druckfest ist.

Der vergrößerte Ausschnitt in Figur 2 zeigt eine Einzelheit des Wickelschlauchs 201, der aus gefalzten und ineinandergesteckten Metallstreifen 202 hergestellt ist. Die Längen der Falze sind so bemessen, dass sich die Metallstreifen 202 in axialer Richtung nicht gegeneinander verschieben können. Dadurch wird der Wickelschlauch in axialer Richtung zug- und druckfest. In radialer Richtung ist der Wickelschlauch 201 ohnehin druckfest. Der innere Wellschlauch 101 ist mit einem Gewebe 108 ummantelt.

Der Wickelschlauch 201 ist aus Metall hergestellt, zum Beispiel aus Edelstahl, Aluminium oder einer Aluminiumlegierung. Grundsätzlich kommen auch Materialkombinationen aus Metall und Kunststoff infrage, solange die axiale Zug- und Druckfestigkeit des Wickelschlauchs gewährleistet ist. Die mit dem Wickelschlauch 201 ummantelte Leitung 200 behält deshalb in allen im Zusammenhang mit den Figuren 1a bis 1c beschriebenen Situationen stets dieselbe Länge L₁. Mit anderen Worten: Bei der Leitung 200 tritt in unterschiedlichen Betriebssituationen keine Längenänderung auf. Dadurch werden auch sämtliche potentielle Gefahren, die mit einer Längenänderung verbunden sind, von vornherein vermieden.

Der Wickelschlauch 201 auf dem äußeren Wellschlauch 102 bildet gleichzeitig einen sehr guten mechanischen Schutz gegen äußere Einflüsse, weil der Wickelschlauch 201 unter anderem auch eine sehr gute Querdruckbelastbarkeit aufweist.

Aufgrund seiner Form lässt sich der Wickelschlauch 201 auch nicht überbiegen. Er dient damit auch gleichzeitig als Überbiegeschutz für die Wellschläuche 101,102.

Bei einem anderen Ausführungsbeispielen können anstelle des Wickelschlauchs aus Metall auch entsprechend gestaltete Elemente aus Kunststoff verwendet werden, die aufgrund ihrer Gestalt die Funktion des Wickelschlauchs übernehmen.

Bei anderen Ausführungsbeispielen ist auch das Gewebe 108, welches den inneren Wellschlauch ummantelt, durch einen Wickelschlauch ersetzt.

Bei allen Ausführungsbeispielen sind jedoch sowohl der innere als auch der äußere Wellschlauch 101,102 nicht durch einen Wickelschlauch ersetzbar, weil ein Wickelschlauch nicht die erforderliche Dichtigkeit zur Begrenzung des Vakuums in dem Zwischenraum 103 aufweist.

Figur 3 zeigt einen Verstärkungsschlauch 300, der aus miteinander verschraubten Kunststoffelementen aufgebaut ist. Die Kunststoffelemente bilden Halbschalen 301, die miteinander verschraubt sind. Figur 3 ist eine Draufsicht auf die Halbschalen 301. Die Halbschalen 301 im wesentlichen S-förmig ausgebildet und weisen an einem Ende einen nach außen gerichteten Vorsprung 302 und an dem gegenüberliegenden Ende einen nach innen gerichteten Vorsprung 303 auf. Die Halbschalen werden so ineinander gelegt, dass die Vorsprünge 302, 303 ineinandergreifen. Jede Halbschale 301 wird mit einer zweiten Halbschale 301 an den Befestigungspunkten 304a- 304c verschraubt, sodass ein Ringkörper mit einem kreisförmigen Querschnitt entsteht. Aus einer Mehrzahl von miteinander verschraubten Halbschalen 301 entsteht auf diese Weise der Verstärkungsschlauch 300. Der Verstärkungsschlauch 300 ist quer zu seiner Längsrichtung flexibel ausgestaltet. Zwischen den Vorsprüngen 302,303 und einem Mittelsteg 306 ist zu diesem Zweck ein gewisses Spiel S vorhanden, das in Figur 3 mit Pfeilen markiert ist. Das Spiel S ist notwendig, um dem Verstärkungsschlauch 300 eine gewisse Flexibilität zu verleihen. Allerdings führt das Spiel S auch dazu, dass der Verstärkungsschlauch 300 sich auch in axialer Richtung längt. Diese Längung ist jedoch durch das Spiel S begrenzt und durch eine entsprechende Bemessung des Spieles S einstellbar.

Werden die Enden der Halbschalen 301 ähnlich wie bei einem Kühlmittel- oder Gelenkschlauch kugelförmig ausgebildet, so wird die grundsätzlich unerwünschte axiale Bewegung stark reduziert.

Der Schlauch 300 dient auch zum Schutz vor einem Überbiegen der Leitung 100

In Figur 4 ist beispielhaft die Befestigung des Geflechts 109 auf dem äußeren Wellschlauchs 102 dargestellt. Die Befestigung des Geflechts 108 auf dem inneren Wellschlauch erfolgt in gleicher Weise.

In dem oberen Teil der Figur 4 oberhalb der strichpunktierten Linie IV-IV ist der äußere Wellschlauch 102 in einem Querschnitt dargestellt. In dem unteren Teil der Figur 4 unterhalb der strichpunktierten Linie IV-IV ist eine Draufsicht auf das Geflecht 109 und den Wellschlauch 102 gezeigt. Das Geflecht 109 wird zusammen mit jeweils einem Ring 401 auf einen zylindrischen Endstutzen 402 des Wellschlauchs 102 aufgeschweißt.

### Bezugszeichenliste

- 100: Leitung
- 101: innerer Wellschlauch
- 102: äußere Wellschlauch
- 103: Zwischenraum

- 106: Kleinflansch
- 107: Verschlussstopfen
- 108: Geflecht
- 109: Geflecht

- 200: Leitung
- 201: Wickelschlauch
- 202: Metallstreifen

- 300: Schlauch
- 301: Halbschalen
- 302: Vorsprung
- 303: Vorsprung
- 304a- 304c: Befestigungspunkte

- 306: Mittelsteg

- 401: Ring
- 402: Endstutzen

## Patentansprüche

1. Vakuumisolierte Leitung (100) mit einem inneren und einem äußeren Wellschlauch (101,102), die durch einen evakuierten Zwischenraum (103) voneinander getrennt sind, wobei einer der Wellschläuche (101,102) mit einem Verstärkungsschlauch (201,300) ummantelt ist, der in axialer Richtung zug- und/oder druckfest ist, **dadurch gekennzeichnet, dass** der Verstärkungsschlauch (300) aus miteinander verbundenen Kunststoffelementen (301) aufgebaut ist, die zueinander beweglich sind, oder dass der Verstärkungsschlauch als Wickelschlauch (201) ausgebildet ist, der aus miteinander verbundenen Metallstreifen (202) aufgebaut ist.

2. Leitung nach Anspruch 1, **dadurch gekennzeichnet, dass** die Wellschläuche (101,102) in Umfangsrichtung gewellt und biegeflexibel ausgebildet sind.

3. Leitung nach Anspruch 1 oder 2, **dadurch gekennzeichnet, dass** der Verstärkungsschlauch (201,300) biegeflexibel ausgebildet ist.

4. Leitung nach einem der vorstehenden Ansprüche, **dadurch gekennzeichnet, dass** der innere und der äußere Wellschlauch (101,102) an ihren Enden vakuumdicht miteinander verschweißt sind.

5. Leitung nach einem der vorstehenden Ansprüche, **dadurch gekennzeichnet, dass** entweder der innere oder der äußere Wellschlauch (101,102) mit dem Verstärkungsschlauch (201,300) ummantelt ist, während der andere Wellschlauch mit einem Geflecht (108,109) ummantelt ist.

6. Verladeeinrichtung für kryogene Fluide mit einer Leitung (200) nach einem der vorstehenden Ansprüche.

## Claims

1. A vacuum-insulated line (100) having an inner and an outer corrugated hose (101, 102), which are separated from one another by means of an evacuated space (103), wherein one of the corrugated hoses (101, 102) is covered with a reinforcement hose (201, 300), which is tensile- and/or pressure resistant in the axial direction, **characterized in that** the reinforcement hose (300) is constructed from interconnected plastic elements (301), which are movable relative to one another or that the reinforcement hose is designed as a winding hose (201), which is constructed from interconnected metal strips (202).

2. The line according to claim 1, **characterized in that** the corrugated hoses (101, 102) are corrugated in the circumferential direction and are designed so as to be flexurally flexible.

3. The line according to claim 1 or 2, **characterized in that** the reinforcement hose (201, 300) is designed so as to be flexurally flexible.

4. The line according to any one of the preceding claims, **characterized in that** the inner and the outer corrugated hose (101, 102) are welded together vacuum-tight at their ends.

5. The line according to any one of the preceding claims, **characterized in that** either the inner or the outer corrugated hose (101, 102) is covered with the reinforcement hose (201, 300), while the other corrugated hose is covered with a mesh (108, 109).

6. A loading device for cryogenic fluids with a line (200) according to any one of the preceding claims.

## Revendications

1. Conduite isolée sous vide (100) avec un tuyau ondulé interne et un tuyau ondulé externe (101, 102) qui sont séparés l'un de l'autre par un espace intermédiaire évacué (103), dans lequel un des tuyaux ondulés (101, 102) est enveloppé d'un tuyau de renforcement (201, 300) qui est résistant à la traction et/ou à la pression dans la direction axiale, **caractérisée en ce que** le tuyau de renforcement (300) est constitué d'éléments en matière plastique (301) reliés entre eux, qui sont mobiles les uns par rapport aux autres, ou **en ce que** le tuyau de renforcement est conçu comme un tuyau hélicoïdal (201) qui est constitué de bandes métalliques (202) reliées entre elles.

2. Conduite selon la revendication 1, **caractérisée en ce que** les tuyaux ondulés (101, 102) sont ondulés dans la direction de la circonférence et sont flexibles.

3. Conduite selon la revendication 1 ou 2, **caractérisée en ce que** le tuyau de renforcement (201, 300) est conçu de manière flexible.

4. Conduite selon l'une des revendications précédentes, **caractérisée en ce que** les tuyaux ondulés interne et externe (101, 102) sont soudés entre eux de manière étanche au vide au niveau de leurs extrémités.

5. Conduite selon l'une des revendications précédentes, **caractérisée en ce que** soit le tuyau ondulé interne soit le tuyau ondulé externe (101, 102) est enveloppée avec le tuyau de renforcement (201, 300), tandis que l'autre tuyau ondulé est enveloppé d'un treillis (108, 109).

6. Dispositif de chargement pour fluides cryogéniques avec une conduite (200) selon l'une des revendications précédentes.
